# EUROPEAN PATENT SPECIFICATION

(11) **EP 3 210 745 B1**
(45) Date of publication and mention of the grant of the patent: **01.05.2019**
(21) Application number: 17157523.6
(22) Date of filing: 23.02.2017
(51) Int. Cl.: B29C 45/40, B29C 45/76

(54) **INJECTION MOLDING MACHINE**
SPRITZGIESSMASCHINE
MACHINE DE MOULAGE PAR INJECTION

(30) Priority: 26.02.2016 JP 2016036375
(43) Date of publication of application: 30.08.2017
(73) Proprietor: Sumitomo Heavy Industries, Ltd., Tokyo 141-6025 (JP)
(72) Inventor: MIYATAKE, Tsutomu, Yokosuka-shi Kanagawa 237-8555 (JP); FUKUMURA, Hideo, Yokosuka-shi Kanagawa 237-8555 (JP)
(74) Representative: Louis Pöhlau Lohrentz

(56) References cited:
- EP-A1- 2 749 392
- WO-A1-2012/174657

## Description

### BACKGROUND OF THE INVENTION

### Field of the Invention

Certain embodiment of the present invention relates to an injection molding machine.

### Description of Related Art

An injection molding machine disclosed in Japanese Unexamined Patent Application Publication No. 2015-131468 has a ball screw for converting the rotation motion of a servomotor for ejection into the linear motion of an ejector plate, and an abnormality of the ejector plate or an abnormality of the ball screw is detected by detecting an inclination of the ejector plate.

European Patent Application EP 2 749 392 A1 describes an injection molding machine in which sensors detect a mold release force by detecting the deformation of ejector tie bars.

International Patent Application WO 2012/174657 A1 discloses a molding system in which deflection of a clamp column is detected.

An injection molding machine has a motion conversion mechanism for converting the rotation motion of a rotary motor into the linear motion of a movable member. The motion conversion mechanism includes a screw shaft, and a screw nut which is screwed to the screw shaft. Balls and rollers may be interposed between the screw shaft and the screw nut.

Conventionally, the screw shaft is sometimes broken due to a load.

### SUMMARY OF THE INVENTION

The present invention has been made in view of the above problem and has a main object to provide an injection molding machine in which it is possible to accurately detect an abnormality of a screw shaft before breakage of the screw shaft.

In order to solve the above problem, according to an aspect of the present invention, there is provided an injection molding machine including: a motion conversion mechanism that includes a screw shaft and a screw nut which is screwed to the screw shaft, and converts rotation motion of a rotary motor into linear motion of a movable member; and an inspection unit that detects bending of the screw shaft.

According to the aspect of the present invention, an injection molding machine in which it is possible to accurately detect an abnormality of a screw shaft before breakage of the screw shaft.

### BRIEF DESCRIPTION OF THE DRAWINGS

Fig. 1 is a diagram showing a state at the time of mold opening completion of an injection molding machine according to an embodiment.
Fig. 2 is a diagram showing a state at the time of mold clamping of the injection molding machine according to the embodiment.
Fig. 3 is a diagram showing a portion of Fig. 2 in an enlarged manner.
Fig. 4 is a sectional view showing a state of an inspection unit at the time of centering of a motion conversion mechanism according to the embodiment and is a sectional view taken along line IV-IV of Fig. 5.
Fig. 5 is a sectional view showing a state of the inspection unit at the time of the centering of the motion conversion mechanism according to the embodiment and is a sectional view taken along line V-V of Fig. 4.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

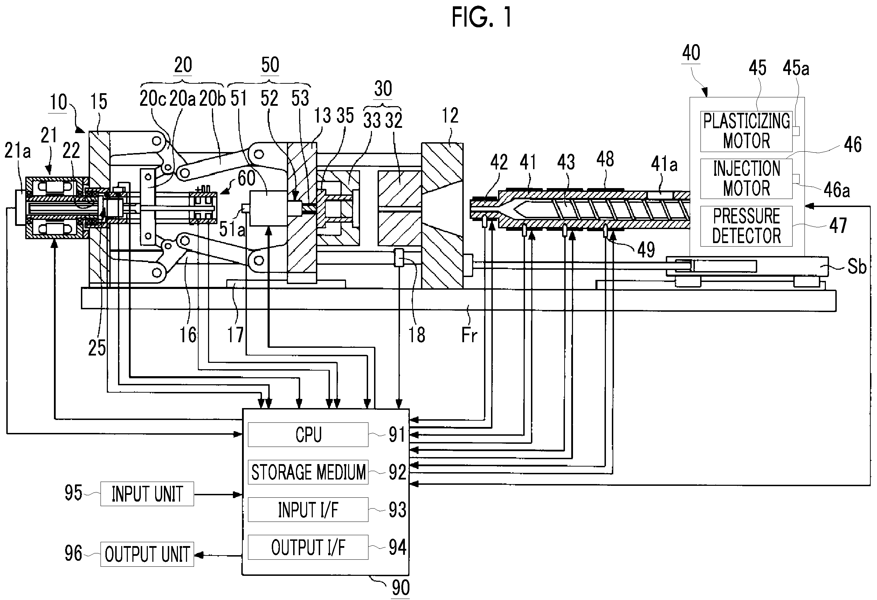

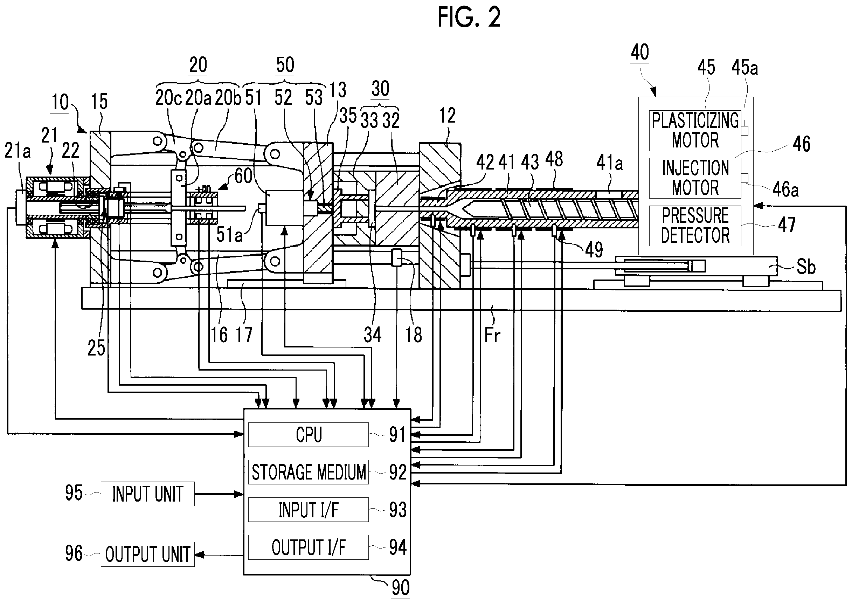

Fig. 1 is a diagram showing a state at the time of mold opening completion of an injection molding machine according to an embodiment. Fig. 2 is a diagram showing a state at the time of mold clamping of the injection molding machine according to the embodiment.

The injection molding machine has a frame Fr, a mold clamping unit 10, an injection unit 40, an ejector unit 50, an inspection unit 60, a controller 90, an input unit 95, and an output unit 96, as shown in Figs. 1 and 2, for example.

First, the mold clamping unit 10 and the ejector unit 50 will be described. In the description of the mold clamping unit 10 and the like, a direction of movement (a rightward direction in Figs. 1 and 2) of a movable platen 13 when performing mold closing will be described as being forward and a direction of movement (a leftward direction in Figs. 1 and 2) of the movable platen 13 when performing mold opening will be described as being backward.

The mold clamping unit 10 performs mold closing, mold clamping, and mold opening of a mold unit 30. The mold clamping unit 10 has a stationary platen 12, the movable platen 13, a support platen 15, a tie bar 16, a toggle mechanism 20, a mold clamping motor 21, and a motion conversion mechanism 25.

The stationary platen 12 is fixed to the frame Fr. A stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retract with respect to the stationary platen 12. A movable mold 33 is mounted on the surface facing the stationary platen 12 in the movable platen 13.

The movable platen 13 advances and retracts with respect to the stationary platen 12, whereby the mold closing, the mold clamping, and the mold opening are performed. The mold unit 30 is configured of the stationary mold 32 and the movable mold 33.

The support platen 15 is connected to the stationary platen 12 with a distance therebetween and is placed on the frame Fr so as to be able to move in a mold opening and closing direction. The support platen 15 may be made so as to be able to move along a guide which is laid on the frame Fr. The guide for the support platen 15 may be shared by the guide 17 for the movable platen 13.

In this embodiment, a configuration is made such that the stationary platen 12 is fixed to the frame Fr and the support platen 15 is movable in the mold opening and closing direction with respect to the frame Fr. However, a configuration may be made such that the support platen 15 is fixed to the frame Fr and the stationary platen 12 is movable in the mold opening and closing direction with respect to the frame Fr.

The tie bar 16 connects the stationary platen 12 and the support platen 15 with a distance therebetween. A plurality of tie bars 16 may be used. The respective tie bars 16 are made so as to be parallel to each other in the mold opening and closing direction and extend according to a mold clamping force . A mold clamping force detector 18 is provided at at least one of the tie bars 16. The mold clamping force detector 18 detects the mold clamping force by detecting a distortion of the tie bar 16 and sends a signal indicating the detection result to the controller 90.

The mold clamping force detector 18 is not limited to a distortion gauge type and may be a piezoelectric type, a capacitive type, a hydraulic type, an electromagnetic type, or the like, and a mounting position thereof is also not limited to the tie bar 16.

The toggle mechanism 20 moves the movable platen 13 with respect to the stationary platen 12. The toggle mechanism 20 is disposed between the movable platen 13 and the support platen 15. The toggle mechanism 20 is configured of a cross head 20a, a pair of link groups, and the like. Each link group has a plurality of links 20b and 20c which are connected to each other by a pin or the like so as to be able to be bent and stretched. The link 20b on one side is oscillatably mounted on the movable platen 13, and the link 20c on the other side is oscillatably mounted on the support platen 15. If the cross head 20a is advanced and retracted, the plurality of links 20b and 20c are bent and stretched, whereby the movable platen 13 advances and retracts with respect to the support platen 15.

The mold clamping motor 21 is mounted on the support platen 15 and activates the toggle mechanism 20. The mold clamping motor 21 advances and retracts the cross head 20a, thereby bending and stretching the links 20b and 20c and thus advancing and retracting the movable platen 13.

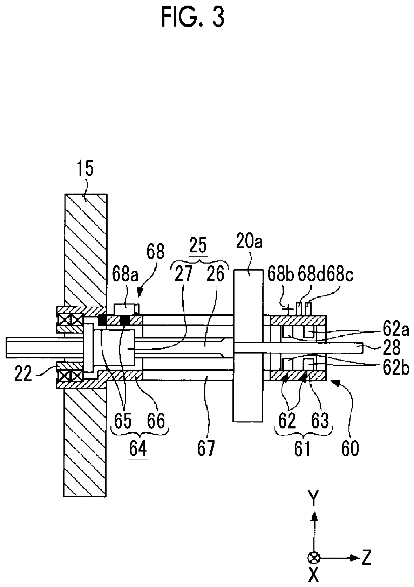

The motion conversion mechanism 25 converts the rotation motion of the mold clamping motor 21 into linear motion and transmits the linear motion to the cross head 20a. The motion conversion mechanism 25 includes a screw shaft 26 (refer to Fig. 3), and a screw nut 27 (refer to Fig. 3) which is screwed to the screw shaft 26. Balls or rollers may be interposed between the screw shaft 26 and the screw nut 27.

An operation of the mold clamping unit 10 is controlled by the controller 90. The controller 90 controls a mold closing process, a mold clamping process, a mold opening process, and the like.

In the mold closing process, the movable mold 33 is brought into contact with the stationary mold 32 by advancing the movable platen 13 by advancing the cross head 20a at a set speed by driving the mold clamping motor 21. The position or the speed of the cross head 20a is detected by, for example, an encoder 21a or the like of the mold clamping motor 21. A signal indicating the detection result is sent to the controller 90.

In the mold clamping process, the mold clamping force is generated by further advancing the cross head 20a to a set position by further driving the mold clamping motor 21. At the time of the mold clamping, a cavity 34 is formed between the movable mold 33 and the stationary mold 32, and the cavity 34 is filled with a liquid molding material. The filled molding material is solidified, whereby a molding product is obtained. The number of cavities 34 may be plural, and in that case, a plurality of molding products are obtained at the same time.

In the mold opening process, the movable mold 33 is separated from the stationary mold 32 by retracting the movable platen 13 by retracting the cross head 20a at a set speed by driving the mold clamping motor 21.

The mold clamping unit 10 of this embodiment is a horizontal type in which the mold opening and closing direction is a horizontal direction. However, the mold clamping unit 10 may be a vertical type in which the mold opening and closing direction is a vertical direction.

The ejector unit 50 pushes the molding product out from the mold unit 30. The ejector unit 50 has an ejector motor 51, a motion conversion mechanism 52, and an ejector rod 53.

The ejector motor 51 is mounted on the movable platen 13. The ejector motor 51 is directly connected to the motion conversion mechanism 52. However, the ejector motor 51 may be connected to the motion conversion mechanism 52 through a belt, a pulley, or the like.

The motion conversion mechanism 52 converts the rotation motion of the ejector motor 51 into the linear motion of the ejector rod 53. The motion conversion mechanism 52 includes, for example, a screw shaft, and a screw nut which is screwed to the screw shaft. Balls or rollers may be interposed between the screw shaft and the screw nut.

The ejector rod 53 is made so as to be able to advance and retract in a through-hole of the movable platen 13. A front end portion of the ejector rod 53 comes into contact with a movable member 35 which is disposed in the movable mold 33 so as to be able to advance and retract. The ejector rod 53 may be connected to the movable member 35.

An operation of the ejector unit 50 is controlled by the controller 90. The controller 90 controls an ejection process and the like.

In the ejection process, the ejector motor 51 is driven so as to advance the ejector rod 53, whereby the movable member 35 is advanced, thereby pushing the molding product out. Thereafter, the ejector motor 51 is driven so as to retract the ejector rod 53, whereby the movable member 35 retracts to the original position. The position or the speed of the ejector rod 53 is detected by, for example, an encoder 51a of the ejector motor 51. A signal indicating the detection result is sent to the controller 90.

Next, the injection unit 40 will be described. In the description of the injection unit 40, unlike the description of the mold clamping unit 10, a direction of movement (the leftward direction in Figs. 1 and 2) of a screw 43 when performing filling will be described as being forward and a direction of movement (the rightward direction in Figs. 1 and 2) of the screw 43 when performing plasticizing will be described as being backward.

The injection unit 40 is installed on a slide base Sb capable of advancing and retracting with respect to the frame Fr and made to be able to advance and retract with respect to the mold unit 30. The injection unit 40 is brought into contact with the mold unit 30 and fills the mold unit 30 with the molding material.

The injection unit 40 has, for example, a cylinder 41, a nozzle 42, the screw 43, a plasticizing motor 45, an injection motor 46, a pressure detector 47, a heater 48, and a temperature detector 49.

The cylinder 41 heats the molding material fed from a feed port 41a into the inside thereof. The feed port 41a is formed in a rear portion of the cylinder 41. The heater 48 such as a band heater and the temperature detector 49 are provided at the outer periphery of the cylinder 41.

The cylinder 41 is divided into a plurality of zones in an axial direction (a right-and-left direction in Figs. 1 and 2) of the cylinder 41. The heater 48 and the temperature detector 49 are provided in each zone. The controller 90 controls the heater 48 such that an actually measured temperature of the temperature detector 49 reaches a set temperature, for each zone.

The nozzle 42 is provided at a front end portion of the cylinder 41 and pressed against the mold unit 30. The heater 48 and the temperature detector 49 are provided at the outer periphery of the nozzle 42 . The controller 90 controls the heater 48 such that an actually measured temperature of the nozzle 42 reaches the set temperature.

The screw 43 is disposed so as to be rotatable and be able to advance and retract in the cylinder 41.

The plasticizing motor 45 rotates the screw 43, thereby sending the molding material forward along a helical groove of the screw 43. The molding material is gradually melted by the heat from the cylinder 41 while being sent forward. The screw 43 retracts as the liquid molding material is sent to the front of the screw 43 and accumulated in a front portion of the cylinder 41.

The injection motor 46 advances and retracts the screw 43. The injection motor 46 advances the screw 43, thereby injecting the liquid molding material accumulated in front of the screw 43 from the cylinder 41, whereby the mold unit 30 is filled with the liquid molding material. Thereafter, the injection motor 46 presses the screw 43 forward, thereby applying a pressure to the molding material in the mold unit 30. A molding material can be replenished when there is a shortage thereof due to cooling contraction. A motion conversion mechanism for converting the rotation motion of the injection motor 46 into the linear motion of the screw 43 is provided between the injection motor 46 and the screw 43. This motion conversion mechanism includes a screw shaft, and a screw nut which is screwed to the screw shaft. Balls or rollers may be interposed between the screw shaft and the screw nut.

The pressure detector 47 is disposed, for example, between the injection motor 46 and the screw 43 and detects a pressure which the screw 43 receives from the molding material, a back pressure against the screw 43, or the like. The pressure which the screw 43 receives from the molding material corresponds to a pressure acting on the molding material from the screw 43. The pressure detector 47 sends a signal indicating the detection result to the controller 90.

An operation of the injection unit 40 is controlled by the controller 90. The controller 90 controls a filling process, a holding pressure process, a plasticizing process, and the like.

In the filling process, the injection motor 46 is driven, thereby advancing the screw 43 at the set speed and thus filling the mold unit 30 with the liquid molding material accumulated in front of the screw 43. The position or the speed of the screw 43 is detected by, for example, an encoder 46a of the injection motor 46. A signal indicating the detection result is sent to the controller 90. If the position of the screw 43 reaches the set position, switching (so-called V/P switching) from the filling process to the holding pressure process is performed. The set speed of the screw 43 may be changed according to the position of the screw 43, a time, or the like.

After the position of the screw 43 reaches the set position in the filling process, the screw 43 may be temporarily stopped at the set position, and thereafter, the V/P switching may be performed. Just before the V/P switching, instead of stopping the screw 43, the screw 43 may be advanced or retracted at a very slow speed.

In the holding pressure process, the injection motor 46 is driven, thereby pressing the screw 43 forward at a set pressure and thus applying pressure to the molding material in the mold unit 30. A molding material can be replenished when there is a shortage thereof due to cooling contraction. The pressure of the molding material is detected by, for example, the pressure detector 47. A signal indicating the detection result is sent to the controller 90.

In the holding pressure process, the molding material in the mold unit 30 is gradually cooled, and at the time of the completion of the holding pressure process, an inlet of the cavity 34 is closed with the solidified molding material. This state is called a gate seal, and back-flow of the molding material from the cavity 34 is prevented. After the holding pressure process, a cooling process is started. In the cooling process, solidification of the molding material in the cavity 34 is performed. The plasticizing process may be performed during the cooling process in order to shorten a molding cycle.

In the plasticizing process, the plasticizing motor 45 is driven, thereby rotating the screw 43 at a set rotational frequency and thus sending the molding material forward along the helical groove of the screw 43. Accordingly, the molding material is gradually melted. The screw 43 retracts as the liquid molding material is sent to the front of the screw 43 and accumulated in the front portion of the cylinder 41. The rotational frequency of the screw 43 is detected by, for example, an encoder 45a of the plasticizing motor 45. A signal indicating the detection result is sent to the controller 90.

In the plasticizing process, in order to restrict the rapid retraction of the screw 43, a setting back pressure may be applied to the screw 43 by driving the injection motor 46. The back pressure against the screw 43 is detected by, for example, the pressure detector 47. A signal indicating the detection result is sent to the controller 90. If the screw 43 retracts to a set position and a predetermined amount of molding material is accumulated in front of the screw 43, the plasticizing process is ended.

The injection unit 40 of this embodiment is an inline screw type. However, the injection unit 40 may be a pre-plasticizing type. In a pre-plasticizing type injection unit, a molding material melted in a plasticizing cylinder is fed into an injection cylinder and the molding material is then injected from the injection cylinder into a mold unit. A screw is disposed in the plasticizing cylinder so as to be rotatable or to be rotatable and be able to advance and retract, and a plunger is disposed in the injection cylinder so as to be able to advance and retract.

The controller 90 has a central processing unit (CPU) 91, a storage medium 92 such as a memory, an input interface 93, and an output interface 94, as shown in Figs. 1 and 2. The controller 90 performs various controls by executing a program stored in the storage medium 92 in the CPU 91. Further, the controller 90 receives a signal from the outside through the input interface 93 and transmits a signal to the outside through the output interface 94.

The input unit 95 receives an input operation of a user and outputs an operation signal corresponding to the input operation of the user to the controller 90. As the input unit 95, for example, a touch panel is used. The touch panel also serves as the output unit 96 (described later).

The output unit 96 displays an operation screen corresponding to the input operation in the input unit 95 under the control by the controller 90. A plurality of operation screens are prepared and are changed over and displayed or displayed with an overlap.

A user performs various settings by operating the input unit 95 while looking at the operation screen which is displayed on the output unit 96. The setting is stored in the storage medium 92 and read out as necessary.

Incidentally, the mold clamping unit 10, the injection unit 40, the ejector unit 50, or the like has a motion conversion mechanism for converting the rotation motion of a rotary motor into the linear motion of a movable member . The motion conversion mechanism includes a screw shaft, and a screw nut which is screwed to the screw shaft. In the following description, the inspection unit 60 is used for the inspection of the motion conversion mechanism 25 of the mold clamping unit 10. However, the inspection unit 60 can also be used for the inspection of the motion conversion mechanism of the injection unit 40 and the inspection of the motion conversion mechanism 52 of the ejector unit 50. In the following description, the mold clamping motor 21 corresponds to a rotary motor stated in the appended claims.

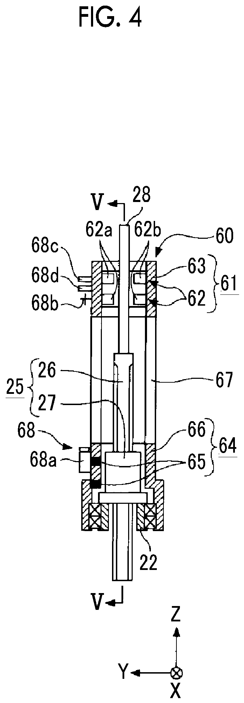

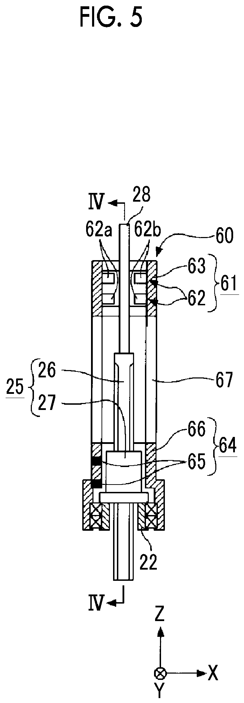

Fig. 3 is a diagram showing a portion of Fig. 2 in an enlarged manner. Fig. 4 is a sectional view showing the state of the inspection unit at the time of centering of the motion conversion mechanism according to the embodiment and is a sectional view taken along line IV-IV of Fig. 5. Fig. 5 is a sectional view showing the state of the inspection unit at the time of centering of the motion conversion mechanism according to the embodiment and is a sectional view taken along line V-V of Fig. 4. In Figs. 3 to 5, an X-axis, a Y-axis, and a Z-axis are perpendicular to each other. The Z-axis is vertical at the time of the centering of the motion conversion mechanism 25 and is horizontal at the time of the mounting of the motion conversion mechanism 25 on the support platen 15.

As shown in Fig. 3, the motion conversion mechanism 25 has the screw shaft 26, and the screw nut 27 which is screwed to the screw shaft 26. The screw nut 27 is rotatably supported on the support platen 15 and rotates along with an output shaft 22 of the mold clamping motor 21. The output shaft 22 of the mold clamping motor 21 is formed in a cylindrical shape and one end portion of the screw shaft 26 is inserted into the inside thereof. The other end portion of the screw shaft 26 is fixed to the cross head 20a. If the output shaft 22 is rotated by driving the mold clamping motor 21, the screw nut 27 rotates, and thus the screw shaft 26 advances and retracts, whereby the cross head 20a advances and retracts.

The disposition of the screw shaft 26 and the screw nut 27 is not limited to the above-described disposition. As the disposition of the screw shaft 26 and the screw nut 27, in addition to the above-described disposition, disposition of the following (1) or disposition of the following (2) can be given as an example.
(1) Disposition is also acceptable in which the screw nut 27 is fixed to the support platen 15, one end portion of the screw shaft 26 is splined to the output shaft 22 of the mold clamping motor 21, and the other end portion of the screw shaft 26 is rotatably supported by a bearing which is held by the cross head 20a. In this case, if the output shaft 22 is rotated by driving the mold clamping motor 21, the screw shaft 26 advances and retracts while rotating, whereby the cross head 20a advances and retracts.
(2) Disposition is also acceptable in which one end portion of the screw shaft 26 is fixed to the output shaft 22 of the mold clamping motor 21 by a bolt or the like, the other end portion of the screw shaft 26 is screwed to the screw nut 27, and the screw nut 27 is mounted on the cross head 20a. In this case, if the output shaft 22 is rotated by driving the mold clamping motor 21, the screw shaft 26 rotates, and thus the screw nut 27 advances and retracts, whereby the cross head 20a advances and retracts.

The centering of the screw shaft 26 and the screw nut 27 (hereinafter, also referred to simply as "centering") is performed by screwing the screw shaft 26 and the screw nut 27 to each other and making their center lines vertically erect, as shown in Figs. 4 and 5. The influence of gravity can be eliminated.

The centering is performed in a state in which the inspection unit 60 is mounted on the motion conversion mechanism 25. The inspection unit 60 acquires data of the motion conversion mechanism 25 at the time of completion of the centering. The data acquired at the time of completion of the centering is used as data when there is no bending in the screw shaft 26.

After the centering, the motion conversion mechanism 25 or the inspection unit 60 is mounted on the support platen 15, as shown in Fig. 3.

The inspection unit 60 detects bending of the screw shaft 26 after the mounting thereof on the support platen 15. The detection may be performed at the time of driving of the mold clamping motor 21 and may be performed at the time of the mold clamping. The bending of the screw shaft 26 due to the mold clamping force is caused by, for example, a collapse of the balance between a pair of link groups of the toggle mechanism 20, a lack of a lubricant, or the like. The larger the bending of the screw shaft 26, the more easily the deterioration of the screw shaft 26 progresses, and the more the deterioration of the screw shaft 26 progresses, the larger the bending of the screw shaft 2 6 becomes . For this reason, an abnormality of the screw shaft 26 can be accurately detected by detecting the bending of the screw shaft 26. The detection of the bending of the screw shaft 26 may be performed periodically.

The inspection unit 60 detects the bending of the screw shaft 26 by detecting the relative inclination between two portions separated from each other in the axial direction of the screw shaft 26. The distance between the two portions is constant, and therefore, the relative inclination between the two portions represents the bending of the screw shaft 26. The larger the relative inclination between the two portions, the larger the bending of the screw shaft 26. The magnitude of the bending of the screw shaft 26 can be determined from the relative inclination between the two portions and the distance between the two portions.

The inspection unit 60 detects the inclination of the screw shaft 26 with respect to the screw nut 27 by detecting the relative inclination between a predetermined portion of the screw shaft 26, (for example, a front end portion of the screw shaft 26), and the screw nut 27. For example, the inspection unit 60 detects the inclination of the screw shaft 26 with respect to the screw nut 27 by detecting the relative inclination between an extension shaft 28 extending forward from a front end of the screw shaft 26 and the screw nut 27. The extension shaft 28 is detachably mounted on the front end portion of the screw shaft 26.

The inspection unit 60 includes, for example, a shaft inclination detector 61, a nut inclination detector 64, a connection frame 67, and a deviation detector 68, as shown in Fig. 3. The inspection unit 60 is supported in a cantilevered manner by the support platen 15, as shown in Fig. 3.

The shaft inclination detector 61 detects the inclination of the extension shaft 28 of the screw shaft 26 with respect to a reference line. As the reference line, for example, the center line of the screw shaft 26 at the time of the centering is used. The shaft inclination detector 61 has a plurality of shaft displacement detection sensors 62, and a support frame 63 for supporting the plurality of shaft displacement detection sensors 62.

The shaft displacement detection sensor 62 detects the displacement of the extension shaft 28 of the screw shaft 26 with respect to the support frame 63. The extension shaft 28 may be formed in a columnar shape or a cylindrical shape, unlike the screw shaft 26, so as to facilitate the detection of the displacement, and may not have a thread groove in the outer circumference.

As the shaft displacement detection sensor 62, although there is no particular limitation, for example, a transmission type laser displacement sensor is used. The shaft displacement detection sensor 62 includes a projector 62a and an optical receiver 62b. The extension shaft 28 cuts off the light from the projector 62a, whereby a shadow is formed at the light which is received by the optical receiver 62b. The displacement of the extension shaft 28 can be detected from the size or the position of the shadow. The transmission type laser displacement sensor is not affected by the surface roughness or the reflectance of the extension shaft 28, unlike a reflection type laser displacement sensor, and therefore, it is possible to accurately detect the displacement of the extension shaft 28.

The shaft inclination detector 61 detects inclination about the Y-axis by the plurality of shaft displacement detection sensors 62 which are disposed at intervals in a Z-axis direction on the same plane perpendicular to the X-axis, as shown in Fig. 4. Further, the shaft inclination detector 61 detects inclination about the X-axis by the plurality of shaft displacement detection sensors 62 which are disposed at intervals in the Z-axis direction on the same plane perpendicular to the Y-axis, as shown in Fig. 5.

The nut inclination detector 64 detects the inclination of the screw nut 27 with respect to a reference line. As the reference line, for example, the center line of the screw nut 27 at the time of the centering is used. The nut inclination detector 64 has a plurality of nut displacement detection sensors 65, and a support cover 66 for supporting the plurality of nut displacement detection sensors 65.

The support cover 66 is fixed to the support platen 15 by a bolt or the like and holds a bearing of the screw nut 27. The screw nut 27 is made to be rotatable inside of the support cover 66.

The nut displacement detection sensor 65 detects the displacement of the screw nut 27 with respect to the support cover 66. As the nut displacement detection sensor 65, although there is no particular limitation, for example, an eddy current displacement sensor is used. The eddy current displacement sensor can accurately detect the displacement of the screw nut 27 without being affected by a lubricant of the screw nut 27.

The nut inclination detector 64 detects inclination about the X-axis by the plurality of nut displacement detection sensors 65 which are disposed at intervals in the Z-axis direction on the same plane perpendicular to the X-axis, as shown in Fig. 4. Further, the nut inclination detector 64 detects inclination about the Y-axis by the plurality of nut displacement detection sensors 65 which are disposed at intervals in the Z-axis direction on the same plane perpendicular to the Y-axis, as shown in Fig. 5.

The connection frame 67 connects the shaft inclination detector 61 and the nut inclination detector 64. For example, the connection frame 67 connects the support frame 63 and the support cover 66. An inspection frame is configured of the support frame 63, the support cover 66, and the connection frame 67. The inspection frame is supported in a cantilevered manner by the support platen 15.

The deviation detector 68 detects the relative deviation between the shaft inclination detector 61 and the nut inclination detector 64 due to deformation of the connection frame 67. The deformation of the connection frame 67 is, for example, bending due to gravity. In a case where the connection frame 67 is bent due to gravity, the positional relationship between the shaft inclination detector 61 which is provided at the tip of the connection frame 67 and the screw shaft 26 changes. An error due to a change in the positional relationship can be corrected based on the detection result of the deviation detector 68.

The deviation detector 68 may perform the detection of the relative deviation between the shaft inclination detector 61 and the nut inclination detector 64 due to the deformation of the connection frame 67 in advance before the detection of the bending of the screw shaft 26 using the shaft inclination detector 61 and the nut inclination detector 64. The detection result of bending can be corrected based on the detection result of the deviation detector 68, and thus the detection accuracy of bending can be improved.

The deviation detector 68 includes, for example, a camera 68a and a target 68b. The camera 68a captures an image of the target 68b. The target 68b is configured with, for example, a mark or the like of a metal chromium film which is formed on a glass plate. The camera 68a is fixed to the nut inclination detector 64 (specifically, the support cover 66), and the target 68b is fixed to the shaft inclination detector 61 (specifically, the support frame 63). The disposition of the camera 68a and the target 68b may be reversed, and a configuration may be made in which the camera 68a is fixed to the shaft inclination detector 61 and the target 68b is fixed to the nut inclination detector 64. The relative deviation between the shaft inclination detector 61 and the nut inclination detector 64 due to the deformation of the connection frame 67 can be detected from the position or the size of the target 68b in the image which is captured by the camera 68a.

The deviation detector 68 may further include a light source 68c. The light source 68c is disposed on the side opposite to the camera 68a on the basis of the target 68b and illuminates the target 68b. The contrast of the image which is captured by the camera 68a can be improved, and thus the size or the position of the target 68b can be accurately detected.

Further, the deviation detector 68 may further include a light diffusion plate 68d. The light diffusion plate 68d is disposed between the light source 68c and the target 68b and diffuses the light from the light source 68c, thereby making the target 68b illuminated with diffused light. The light can uniformly illuminate the target 68b. The light diffusion plate 68d is configured with, for example, frosted glass or the like.

The inspection unit 60 detects the bending of the screw shaft 26 by detecting the inclination of the extension shaft 28 of the screw shaft 26 with respect to the reference line and the inclination of the screw nut 27 with respect to the reference line and detecting the relative inclination between the extension shaft 28 and the screw nut 27, based on the inclination detection results. The magnitude of the bending of the screw shaft 26 can be determined from the relative inclination between the extension shaft 28 and the screw nut 27 and the distance between the extension shaft 28 and the screw nut 27.

The controller 90 plays a role of an estimating unit that estimates the degree of deterioration of the motion conversion mechanism 25, based on the bending of the screw shaft 26 which is detected by the inspection unit 60. The relationship between the bending of the screw shaft 26 and the degree of deterioration of the motion conversion mechanism 25 is determined by a durability test or the like, and the relationship stored in the storage medium 92 in advance is read out and used. The estimating unit may be provided separately from the controller 90.

The controller 90 causes the output unit 96 to output a notification relating to the degree of deterioration of the motion conversion mechanism 25, based on the bending of the screw shaft 26 which is detected by the inspection unit 60. An image display unit, a speaker, or the like is used for the output unit 96, and an image, a sound, or the like is used for the notification. A user of the injection molding machine, who has received the notification, can know the degree of deterioration or the like of the motion conversion mechanism 25.

For example, the controller 90 may cause the output unit 96 to output a notification indicating the relationship between the degree of deterioration of the motion conversion mechanism 25 and an allowable range thereof . A user of the injection molding machine, who has received the notification, can know a remaining life or the like of the motion conversion mechanism 25. Replacement of the motion conversion mechanism 25 can be performed before breakage of the motion conversion mechanism 25.

Further, the controller 90 may cause the output unit 96 to output an alarm in a case where the deterioration degree of the motion conversion mechanism 25 exceeds the allowable range. A plurality of threshold values for the allowable range may be prepared, and a plurality of types of alarms may be prepared. Since notice of a slight abnormality is given before the occurrence of a severe abnormality, it is possible to take a countermeasure such as preparation or replacement of a replacement part in advance before the motion conversion mechanism 25 is broken. Replacement is performed before breakage of the motion conversion mechanism 25, whereby breakage of mechanical parts around the motion conversion mechanism 25 or interruption of production of molding products can be avoided. Further, it is acceptable if preparation of replacement parts is performed after a notification of a slight abnormality and before occurrence of a severe abnormality, and therefore, the storage period of the replacement parts can be shortened and the storage space can be reduced.

The controller 90 may stop the operation of the injection molding machine in a case where the degree of deterioration of the motion conversion mechanism 25 exceeds the allowable range. For example, the controller 90 may stop the operation of the injection molding machine in a case where a severe abnormality is detected.

The embodiment of the injection molding machine has been described above. However, the present invention is not limited to the above-described embodiment, and various modifications or improvements can be made within the scope of the concept of the present invention stated in the appended claims.

For example, the inspection unit 60 includes both the shaft inclination detector 61 and the nut inclination detector 64. However, the inspection unit 60 may include only one of them. For example, in a case where the inclination of the screw nut 27 is negligible compared to the inclination of the extension shaft 28 of the screw shaft 26, the inspection unit 60 may not include the nut inclination detector 64. Similarly, in a case where the inclination of the extension shaft 28 of the screw shaft 26 is negligible compared to the inclination of the screw nut 27, the inspection unit 60 may not include the shaft inclination detector 61.

Further, the inspection unit 60 includes the deviation detector 68. However, in a case where deformation of the connection frame 67 is negligible, the inspection unit 60 may not include the deviation detector 68. For example, in a case where the mold clamping unit 10 is not a horizontal type but a vertical type, the connection frame 67 hardly bends due to gravity, and therefore, the inspection unit 60 may not include the deviation detector 68.

Further, the inspection unit 60 detects the bending of the screw shaft 26 by detecting the inclination of the screw shaft 26. However, the detection of the bending is not limited thereto. For example, the inspection unit 60 may detect the bending of the screw shaft 26 by detecting the displacement of the screw shaft 26.

### Brief Description of the Reference Symbols

- 10:: mold clamping unit
- 12:: stationary platen
- 13:: movable platen
- 15:: support platen
- 20:: toggle mechanism
- 21:: mold clamping motor
- 25:: motion conversion mechanism
- 26:: screw shaft
- 27:: screw nut
- 28:: extension shaft
- 40:: injection unit
- 41:: cylinder
- 42:: nozzle
- 43:: screw
- 46:: injection motor
- 50:: ejector unit
- 51:: ejector motor
- 52:: motion conversion mechanism
- 53:: ejector rod
- 60:: inspection unit
- 61:: shaft inclination detector
- 64:: nut inclination detector
- 67:: connection frame
- 68:: deviation detector
- 90:: controller
- 96:: output unit

## Claims

1. An injection molding machine comprising:
a motion conversion mechanism (25) that includes a screw shaft (26) and a screw nut (27) which is screwed to the screw shaft (26), and converts rotation motion of a rotary motor (21) into linear motion of a movable member;
**characterized by**
an inspection unit (60) that is configured to detect bending of the screw shaft (26), wherein the inspection unit (60) is configured to detect relative inclination between a predetermined portion of the screw shaft (26), and the screw nut (27).

2. The injection molding machine according to Claim 1, wherein the inspection unit (60) includes a shaft inclination detector (61) that is configured to detect inclination of the predetermined portion of the screw shaft (26) with respect to a reference line.

3. The injection molding machine according to Claim 1 or 2, wherein the inspection unit (60) includes a nut inclination detector (64) that is configured to detect inclination of the screw nut (27) with respect to a reference line.

4. The injection molding machine according to Claim 1, wherein the inspection unit (60) includes a shaft inclination detector (61) that is configured to detect inclination of the predetermined portion of the screw shaft (26) with respect to a reference line, a nut inclination detector (64) that is configured to detect inclination of the screw nut (27) with respect to a reference line, a connection frame (67) which connects the shaft inclination detector (61) and the nut inclination detector (64), and a deviation detector (68) that is configured to detect a relative deviation between the shaft inclination detector (61) and the nut inclination detector (64) due to deformation of the connection frame (67).

5. The injection molding machine according to any one of Claims 1 to 4, further comprising:
an estimating unit (90) that is configured to estimate the degree of deterioration of the motion conversion mechanism (25), based on the bending which is detected by the inspection unit (60) .

6. The injection molding machine according to any one of Claims 1 to 5, further comprising:
an output unit (96) that is configured to output a notification relating to the degree of deterioration of the motion conversion mechanism (25), based on the bending which is detected by the inspection unit (60).

## Patentansprüche

1. Spritzgießmaschine, die Folgendes umfasst:
einen Bewegungsumsetzungsmechanismus (25), der eine Schraubenwelle (26) und eine Schraubenmutter (27), die auf die Schraubenwelle (26) geschraubt ist, enthält und eine Drehbewegung eines Drehmotors (21) in eine geradlinige Bewegung eines beweglichen Elements umsetzt;
**gekennzeichnet durch**
eine Prüfeinheit (60), die konfiguriert ist, ein Biegen der Schraubenwelle (26) zu detektieren, wobei die Prüfeinheit (60) konfiguriert ist, eine relative Neigung zwischen einem vorgegebenen Abschnitt der Schraubenwelle (26) und der Schraubenmutter (27) zu detektieren.

2. Spritzgießmaschine nach Anspruch 1, wobei die Prüfeinheit (60) einen Wellenneigungsdetektor (61) enthält, der konfiguriert ist, die Neigung des vorgegebenen Abschnitts der Schraubenwelle (26) in Bezug auf eine Referenzlinie zu detektieren.

3. Spritzgießmaschine nach Anspruch 1 oder 2, wobei die Prüfeinheit (60) einen Mutternneigungsdetektor (64) enthält, der konfiguriert ist, die Neigung der Schraubenmutter (27) in Bezug auf eine Referenzlinie zu detektieren.

4. Spritzgießmaschine nach Anspruch 1, wobei die Prüfeinheit (60) einen Wellenneigungsdetektor (61), der konfiguriert ist, die Neigung des vorgegebenen Abschnitts der Schraubenwelle (26) in Bezug auf eine Referenzlinie zu detektieren, einen Mutternneigungsdetektor (64), der konfiguriert ist, die Neigung der Schraubenmutter (27) in Bezug auf eine Referenzlinie zu detektieren, einen Verbindungsrahmen (67), der den Wellenneigungsdetektor (61) und den Mutternneigungsdetektor (64) verbindet, und einen Abweichungsdetektor (68), der konfiguriert ist, eine relative Abweichung zwischen dem Wellenneigungsdetektor (61) und dem Mutternneigungsdetektor (64) aufgrund einer Verformung des Verbindungsrahmens (67) zu detektieren, enthält.

5. Spritzgießmaschine nach einem der Ansprüche 1 bis 4, die ferner Folgendes umfasst:
eine Schätzeinheit (90), die konfiguriert ist, den Grad der Verschlechterung des Bewegungsumsetzungsmechanismus (25) auf der Grundlage des Biegens, das durch die Prüfeinheit (60) detektiert wird, zu schätzen.

6. Spritzgießmaschine nach einem der Ansprüche 1 bis 5, die ferner Folgendes umfasst:
eine Ausgabeeinheit (96), die konfiguriert ist, eine Meldung in Bezug auf den Grad der Verschlechterung des Bewegungsumsetzungsmechanismus (25) auf der Grundlage des Biegens, das durch die Prüfeinheit (60) detektiert wird, auszugeben.

## Revendications

1. Une machine de moulage par injection comprenant :
un mécanisme de conversion de mouvement (25) qui comprend un arbre à vis (26) et un écrou de vis (27) qui est vissé sur l'arbre à vis (26) et convertit le mouvement de rotation d'un moteur rotatif (21) en mouvement linéaire d'un élément mobile ;
**caractérisée par** :
une unité d'inspection (60) qui est configurée pour détecter la courbure de l'arbre à vis (26), dans laquelle l'unité d'inspection (60) est configurée pour détecter l'inclinaison relative entre une partie prédéterminée de l'arbre à vis (26) et l'écrou de vis (27).

2. La machine de moulage par injection selon la revendication 1, dans laquelle l'unité d'inspection (60) comprend un détecteur d'inclinaison d'arbre (61) qui est configuré pour détecter de l'inclinaison de la partie prédéterminée de l'arbre à vis (26) par rapport à une ligne de référence.

3. La machine de moulage par injection selon la revendication 1 ou 2, dans laquelle l'unité d'inspection (60) comprend un détecteur d'inclinaison d'écrou (64) qui est configuré pour détecter l'inclinaison de l'écrou de vis (27) par rapport à une ligne de référence.

4. La machine de moulage par injection selon la revendication 1, dans laquelle l'unité d'inspection (60) comprend un détecteur d'inclinaison d'arbre (61) qui est configuré pour détecter l'inclinaison de la partie prédéterminée de l'arbre à vis (26) par rapport à une ligne de référence, un détecteur d'inclinaison d'écrou (64) qui est configuré pour détecter l'inclinaison de l'écrou de vis (27) par rapport à une ligne de référence, un bâti de raccordement (67) qui raccorde le détecteur d'inclinaison d'arbre (61) et le détecteur d'inclinaison d'écrou (64), et un détecteur de déviation (68) qui est configuré pour détecter une déviation relative entre le détecteur d'inclinaison d'arbre (61) et le détecteur d'inclinaison d'écrou (64) en raison de la déformation du bâti de raccordement (67).

5. La machine de moulage par injection selon l'une quelconque des revendications 1 à 4, comprenant en outre :
une unité d'estimation (90) qui est configurée pour estimer le degré de détérioration du mécanisme de conversion de mouvement (25), sur la base de la courbure qui est détectée par l'unité d'inspection (60).

6. La machine de moulage par injection selon l'une quelconque des revendications 1 à 5, comprenant en outre :
une unité de sortie (96) qui est configurée pour transmettre une notification concernant le degré de détérioration du mécanisme de conversion de mouvement (25), sur la base de la courbure qui est détectée par l'unité d'inspection (60).
